# EUROPEAN PATENT APPLICATION

(11) **EP 2 302 321 A1**
(43) Date of publication of application: **30.03.2011**
(21) Application number: 10161022.8
(22) Date of filing: 26.04.2010
(51) Int. Cl.: G01C 9/06, G01C 9/10

(54) **Tilt sensor**

(30) Priority: 29.09.2009 TW 98133043
(71) Applicant: Everlight Electronics Co., Ltd., Tucheng T'ai pei (TW)
(72) Inventor: Lai, Lu-Ming, Taipei, Taiwan, R.O.C. (TW)
(74) Representative: Becker Kurig Straus

(57) **Abstract**

A tilt sensor including a body, a plurality of metal pad pairs, and a moving element is provided. The body is suitable for tilting in a plurality of tilt directions and has a movement region having a plurality of corners. The metal pad pairs are respectively located in at least a portion of the corners. The moving element is located in the movement region. The moving element moves to one of the corners and physically contacts with the metal pad pair located in the corner when the body tilts towards one of the tilt directions, such that the metal pads of the metal pad pair are electrically connected with each other via the moving element.

## Description

### BACKGROUND OF THE INVENTION

### Field of the Invention

The invention relates to a sensor, and particularly to a tilt sensor.

### Description of Related Art

In general, most tilt sensors in the market only have two-phase sensing abilities, i.e. only being able to sense two tilt directions. Besides, the size of tilt sensors is usually large. Since consuming electronic products, for example, mobile phones focus on being light, slim, and compact, the conventional tile sensors have difficulty being applied therein.

Besides, when using tilt sensors having four-phase sensing abilities (being able to sense directions of up, down, left and right), two sets of two phase sensors are usually required, such that the fabrication cost, the size, and fabrication processes thereof can not be reduced effectively.

Hence, how to design a kind of tilt sensors that are tiny, have low cost and are suitable for being applied in consuming electronic products which are light, slim and have low cost has become an essential topic in the industry.

### SUMMARY OF THE INVENTION

The invention relates tilt sensor which is capable of sensing a plurality of tilt directions and has advantages of thinness, having low cost, and being fabricated easily.

The invention provides a tilt sensor includes a body, a plurality of metal pad pairs, and a moving element. The body is suitable for tilting in a plurality of tilt directions and has a movement region which has a plurality of corners. The metal pad pairs are respectively located in at least a portion of the corners. The moving element is located in the movement region. When the body tilts towards one of the tilt directions, the moving element moves to one of the corners along the tilt direction of the body and physically contacts with the metal pad pair located in the corner, such that the metal pads of the metal pad pair are electrically connected with each other via the moving element.

In an embodiment of the invention, the movement region is a square movement region and the square movement region has four corners.

In an embodiment of the invention, the metal pad pairs are respectively disposed in each of the corners of the square movement region.

In an embodiment of the invention, the metal pad pairs are respectively disposed in three of the corners.

In an embodiment of the invention, the moving element is a metal ball.

In an embodiment of the invention, a size of the metal ball is larger than 0.1 mm and smaller than or equal to 0.5 mm.

In an embodiment of the invention, the body has a substrate and a housing. The housing is disposed on the substrate and has a recess structure to define the movement region, and each of the metal pad pairs is disposed on the substrate.

In an embodiment of the invention, the circuit substrate is a printed circuit board.

In an embodiment of the invention, the metal pads of the metal pad pairs of the tilt sensor are electrically connected with each other via the moving element which moves to different corners. Thus, the tilt direction of the tilt sensor is able to be determined by a simple tilt sensing function. Besides, the structure of the tilt sensor is also fabricated easily. Moreover, a size of the moving element is larger than 0,1 mm and smaller than or equal to 0.5 mm, such that the thickness of the tilt sensor is effectively reduced.

In order to make the aforementioned and other features and advantages of the invention more comprehensible, several embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic diagram showing operations of a tilt sensor sensing various tilt directions according to the first embodiment of the invention.

FIG. 2 is a schematically cross-section view of FIG. 1 along line AA'.

### DESCRIPTION OF EMBODIMENTS

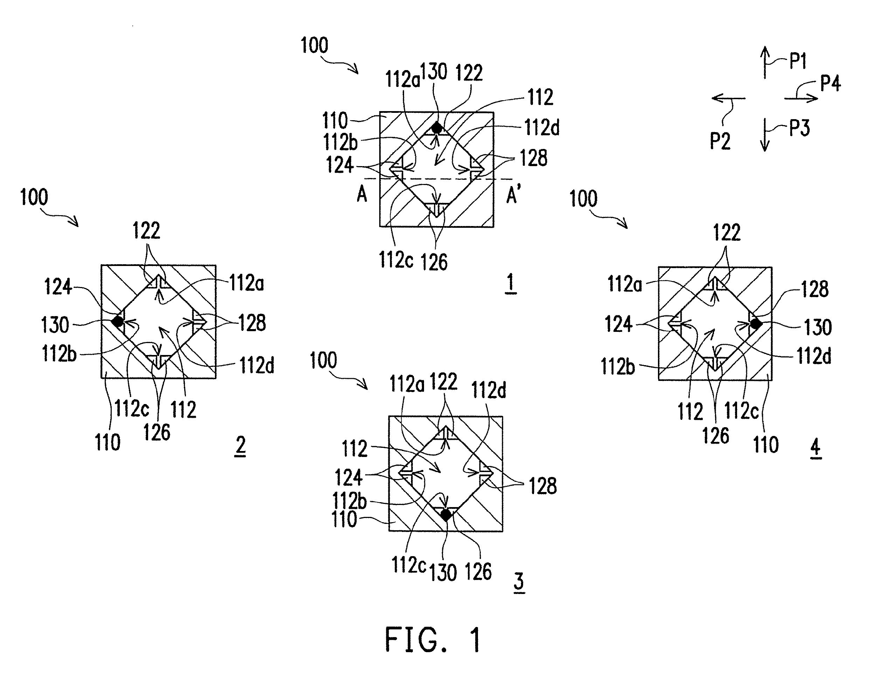

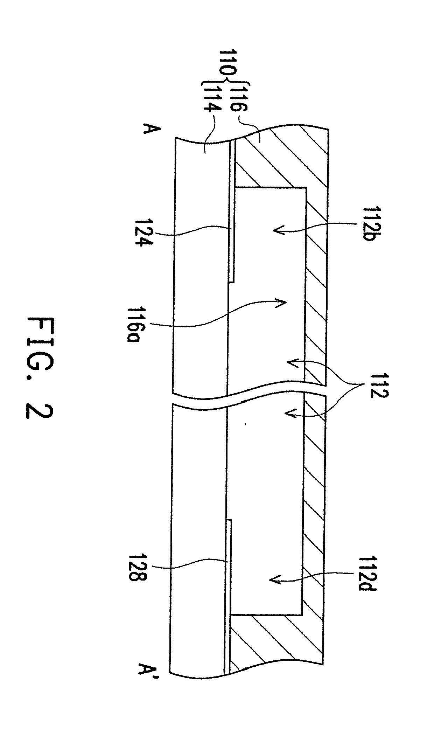

FIG. 1 is a schematic diagram showing operations of a tilt sensor sensing various tilt directions according to the first embodiment of the invention. FIG. 2 is a schematically cross-section view of FIG. 1 along line AA'. Referring to both FIG. 1 and FIG. 2, the tilt sensor 100 includes a body 110, a plurality of metal pad pairs 122, 124, 126 and 128, and a moving element 130. The body 110 is suitable for tilting in a plurality of tilt directions P1, P2, P3 and P4. The metal pad pairs 122, 124, 126 and 128 and the moving element 130 are in the body 110.

The body 110 has a movement region 112 which has a plurality of corners 112a, 112b, 112c and 112d. In the embodiment, the movement region 112 is a square movement region, which is used as an example to illustrate the concept of the invention. Thus, the movement region 112 has four corners 112a, 112b, 112c and 112d. However, in another embodiment, the shape of the movement region 112 may be other polygons such as a regular pentagon, a regular hexagon or a regular n-sided polygon, where n is a positive integer greater than 4, and thus the movement region 112 has the number of corners corresponding to the shape thereof.

In the embodiment, the body 110 has a substrate 114 and a housing 116 as shown in FIG. 2. The housing 116 is disposed on the substrate 114 and has a recess structure 116a to define the movement region 112. Specifically, the housing 116 may be formed through injection molding or punching molding, and the substrate 114 is, for example a printed circuit board. After completing the fabrication of the housing 116, the housing 116 and the substrate 114 are sealed together by an encapsulating material or related bonding techniques, such that the body 110 is formed.

The metal pad pairs 122, 124, 126 and 128 are respectively located in at least a portion of the corners 112a, 112b, 112c and 112d as shown in FIG. 1. When the shape of the movement region 112 is designed as another polygon, the number of the metal pad pairs may be adjusted correspondingly to meet actual requirements. Specifically, four metal pad pairs are used and the movement region 112 is a square movement region in the embodiment. The aforementioned embodiment is only used as an example, but not to limit the invention. In another embodiment, the number of the metal pad pairs may be three, and the metal pad pairs are, for example located in the corners 112a, 112b and 112d of the movement region 112. Related description will be illustrated in detail below. In the embodiment, the metal pad pairs 122, 124, 126 and 128 are disposed on the substrate 114 and respectively located in the four corners 112a, 112b, 112c and 112d of the movement region 112 as shown in FIGs. 1 and 2.

The moving element 130 is located in the movement region 112. When the body 110 tilts towards one of the tilt directions, e.g. the tilt direction P1, the moving element 130 moves to the corner 112a along the tilt direction P1 of the body 110 and physically contacts with the metal pad pair 122 in the corner 112a, such that the metal pads of the metal pad pair 122 are electrically connected with each other via the moving element 130. Similarly, when the body 110 tilts towards the tilt direction P2, the moving element 130 moves to the corner 112b along the tilt direction P2, and physically contacts with the metal pad pair 124 in the corner 112b, such that the metal pads of the metal pad pair 124 are electrically connected with each other via the moving element 130. Thus, the movement of the moving element 130 when the body 110 tilts towards the tilt directions P3 and P4 can be referred to the above description. In the embodiment, the moving element 130 is, for example a metal ball. A size of the metal ball is substantially larger than 0.5mm and smaller than or equal to 0.1mm.

Moreover, in order to specifically illustrate a sensing function and operations of the tilt sensor of the invention, detailed description is provided below with reference to FIG. 1.

First, FIG. 1 is a schematic diagram showing the moving element 130 moves to various positions corresponding to different tilt directions P1, P2, P3 and P4 when the tilt sensor 100 is disposed on a horizontal plane, for example. For example, when the body 110 tilts downward in the tilt direction P1, the moving element 130 in the movement region 112 moves towards the corner 112a due to gravity, such that state 1 of FIG. 1 is achieved. At this time, since the moving element 130 moves to the metal pad pair 122 in the corner 112a and physically contacts with the metal pad pair 122, the metal pads of the metal pad pair 122 are electrically connected with each other via the moving element 130, wherein the moving element 130 has conductivity. Thus, the tile direction of the tilt sensor 100 is able to be determined as the tilt direction P1 according to the conducting state of the metal pad pair 122.

Similarly, when the body 110 tilts downward in the tilt direction P2, the moving element 130 in the movement region 112 moves towards the corner 112b due to gravity, such that state 2 of FIG. 1 is achieved. At this time, since the moving element 130 moves to the metal pad pair 124 in the corner 112b and physically contacts with the metal pad pair 124, the metal pads of the metal pad pair 124 are electrically connected with each other (e.g. electrically conducted). Thus, the tile direction of the tilt sensor 100 is able to be determined as the tilt direction P2 based on the conducting state of the metal pad pair 124.

Similarly, when the body 110 tilts downward in the tilt directions P3 and P4, the moving element 130 in the movement region 112 moves towards the corners 112c and 112d accordingly due to gravity, such that state 3 and 4 of FIG. 1 are respectively achieved. Specifically, at states 3 and 4, the moving element 130 respectively moves to the metal pad pair 126 in the corner 112c and the metal pad pair 128 in the corner 112d, and physically contacts with the metal pad pairs 126 and 128 accordingly. Thus, the metal pads of the metal pad pair 126 and the metal pads of the metal pad pair 128 are electrically connected with each other via the moving element 130 (e.g. electrically conducted). Hence, the tile direction of the tilt sensor 100 is able to be determined as the tilt direction P3 or P4 based on whether the metal pad pair 126 or the metal pad pair 128 is conducted.

From the above, the tilt direction of the tilt sensor 100 is able to be deduced based on which one of the metal pad pair 122, 124, 126 and 128 is conducted. Besides, since the size of the metal ball is substantially larger than 0.1 mm and smaller than or equal to 0.5 mm, the thickness of the tilt sensor 100 is effectively reduced to 0.8mm or even less.

In an embodiment, the number of the metal pad pairs may be three, and the metal pad pairs are, for example located in the corners 112a, 112b and 112d of the move region 112. Hence, the title direction of the tilt sensor is able to be sensed based on the conducting states of the three metal pad pairs respectively corresponding to the three tilt directions P1, P2 and P4.

When all of the three metal pad pairs are not at conducting states, the tilt direction of the tilt senor 110 is deduced as the tilt direction P3. Thus, the number of the metal pad pair can be appropriately adjusted based on design demands, and the invention is not limited thereto.

It should be noted that, the tilt sensor 100 placed on a horizontal plane and sensing various tilt directions is only used as an example. The tilt sensor 100 also could be used to sense various rotation directions on a vertical plane. Besides, the tilt sensor 100 could be designed as an intelligent orientation sensor in a digital camera which recognizes when the camera is rotated from horizontal to vertical. For example, at state 3, the tilt sensor 200 is regarded as being placed on a vertical plane, and then the moving element 130 moves to the corner 112c due to gravity and physically contacts with the metal pad pair 126, such that the metal pads of the metal pad pair 126 are electrically connected with each other (e.g. electrically conducted). At this time, the tilt direction of the tilt sensor 100 is determined as a vertical direction. Then, when the tilt sensor 100 is rotated by 90, 180 and 270 degree in a clockwise direction parallel to the vertical plane, the moving element 130 moves to the corners 112d, 112a and 112b accordingly so that the metal pad pairs 128, 122 and 124 are electrically conducted as shown in state 4, state 1 and state 2 respectively. In other words, the tilt sensor 100 is able to deduce the rotation state thereof based on which one of the metal pad pair 128, 122 and 124 is conducted.

In addition, in the tilt sensor 100 applied in sensing various rotation angles, the shape of the movement region 112 is able to be designed as polygons mentioned above. Thus, the tilt sensor 100 is capable of sensing substantially more rotation angles. For example, when movement region 122 is regular hexagon, the rotation angles able to be sensed are 60, 120, 180 and 270 degree. When the movement region 122 is regular nonagon, the rotation angles able to be sensed are 40, 80, 120, 160, 200, 240, 280 and 320 degree. In other words, for the movement region 120 shaped in n-sided polygon, the greater n is, the more the rotation angles are able to be sensed, and the shape of the movement region 120 is designed according to user's requirement. The abovementioned is given as an example, but not intended to limit the scope of the invention.

In summary, the tilt sensor of the invention has at least the following advantages. First, the structure of the body is appropriately designed. In detail, the movement region therein is designed as having a plurality of corners, and one metal pad pair is disposed at least a portion of the corners. When the moving element in the movement region moves to one of the corners due to gravity, the metal pads of the metal pad pair in the correspond corner are electrically connected with each other via the moving element. In other words, by utilizing the characteristic of the moving element moving to one of the corners to make the metal pad pair therein be electrically conducted, the tilt direction of the tilt sensor is able to be deduced in a simple sensing manner. Moreover, the size of the moving element is larger than 0.1 mm and smaller than or equal to 0.5 mm, such that the thickness of the tilt sensor is effectively reduced.

Though the invention has been disclosed above by the embodiments, they are not intended to limit the present invention. Anybody skilled in the art can make some modifications and variations without departing from the spirit and scope of the invention. Therefore, the protecting range of the invention falls in the appended claims.

## Claims

1. A tilt sensor (100), comprising:
a body (110), suitable for tilting in a plurality of tilt directions (P1, P2, P3, P4) and having a movement region (112) which has a plurality of corners (112a, 112b, 112c, 112d);
a plurality of metal pad pairs (122, 124, 126, 128), respectively located in at least a portion of the corners (112a, 112b, 112c, 112d); and
a moving element (130), located in the movement region (112), wherein when the body (110) tilts towards one of the tilt directions (P1, P2, P3, P4), the moving element moves (130) to one of the corners (112a, 112b, 112c, 112d) along the tilt direction of the body (110) and physically contacts with one of the metal pad pairs (122, 124, 126, 128) respectively located in the corners (112a, 112b, 112c, 112d), such that the metal pads of the metal pad pair are electrically connected with each other via the moving element (130).

2. The tilt sensor of claim 1, wherein the movement region (112) is a square movement region and the square movement region has four corners (112a, 112b, 112c, 112d).

3. The tilt sensor of claim 2, wherein the metal pad pairs (122, 124, 126, 128) are respectively disposed in each of the corners (112a, 112b, 112c, 112d) of the square movement region.

4. The tilt sensor of claim 2, wherein the metal pad pairs are respectively disposed in three of the corners (112a, 112b, 112c, 112d).

5. The tilt sensor as claimed in any of the preceding claims, wherein the moving element (130) is a metal ball.

6. The tilt sensor of claim 5, wherein a size of the metal ball is larger than 0.1 mm and smaller than or equal to 0.5 mm.

7. The tilt sensor as claimed in any of the preceding claims, wherein the body (110) has a substrate (114) and a housing (116), the housing (116) is disposed on the substrate (114) and has a recess structure (116a) to define the movement region (112), and the metal pad pairs (122, 124, 126, 128) are disposed on the substrate (114).

8. The tilt sensor of claim 7, wherein the substrate (114) is a printed circuit board.
